# EUROPEAN PATENT APPLICATION

(11) **EP 2 695 561 A1**
(43) Date of publication of application: **12.02.2014**
(21) Application number: 12425136.4
(22) Date of filing: 09.08.2012
(51) Int. Cl.: A47J 45/06

(54) **Handle for an article of cookware**

(71) Applicant: Bialetti Industrie S.p.A., 25030 Coccaglio, Brescia (IT)
(72) Inventor: Giannone, Alfonso, 24040 Suisio (BG) (IT)
(74) Representative: Sgobba, Marco

(57) **Abstract**

A handle designed to be attached to the sidewall of an article of cookware and to be held in the hand of a user for acting upon said article of cookware, comprising a support element (1) extending between first (2) and second (3) ends, the first end (2) of said support element comprising means (4) for attachment thereof to the sidewall (5) of the article of cookware (6). Said support element comprises a first part (7) and at least one second part (8), said first and said second parts being in overlapping relationship at their respective overlapping faces (11, 12), at least one housing (13, 14) formed in at least one of the parts and open at both faces of the part, a non-slip member (15, 16) inserted in said housing and partially projecting out of the face opposite to the face of said part with the housing, that overlaps the other part.

Therefore, the handle is equipped with non-slip areas, which are formed during fabrication of the handle, with elements that can provide a variety of color combinations, allowed by the particular plastic materials in use.

## Description

The present invention relates to a handle designed to be attached to the sidewall of an article of cookware and to be held in the hand of a user for acting upon said article of cookware, comprising a support element extending between first and second ends, the first end of said support element comprising means for attachment thereof to the sidewall of the article of cookware.

The term cookware is intended to designate any object that is used for preparing, heating and cooking food, such as frying pans, pots, saucepans and the like, which are made of suitable materials such as steel, copper, aluminum, possibly coated with ceramic or synthetic non-stick materials, such as PTFE (polytetrafluoroethylene).

Such cookware items are known to be equipped with one or more handles, attached to the sidewall thereof, and allowing the item to be grasped with one or both hands by the user. Furthermore, to prevent hands from slipping and losing hold of the handle, the latter is known to be entirely or partially coated with a non-slip material, whose surface is also sometimes formed with projecting ribs to improve hand grip.

These non-slip coatings have the drawback of both preventing the use of structural shapes that might improve the overall appearance of the handle, and requiring an additional special processing step for coating the handle at the end of the fabrication process, thereby involving an increase of the overall manufacturing costs.

The object of the present invention is to provide a cookware handle that has a structure in which non-slip areas can be formed during fabrication of the handle, and that can also use parts whose structure allows the formation of structural shapes that also improve of the overall appearance of the handle.

These and other objects, as better explained hereafter, are fulfilled by the handle as defined in the accompanying claim 1.

The invention will be now described in greater detail with reference to certain practical embodiments, given by way of illustration and without limitation, and shown in the annexed drawings, in which:
- Figure 1 shows a perspective view of the top side of a handle of the invention, in a first embodiment particularly suitable for frying pans or low saucepans;
- Figure 2 shows a perspective view of the bottom side of the handle of Figure 1;
- Figure 3 shows a sectional view of the handle of the invention, as taken along the line III-III of Figure 1;

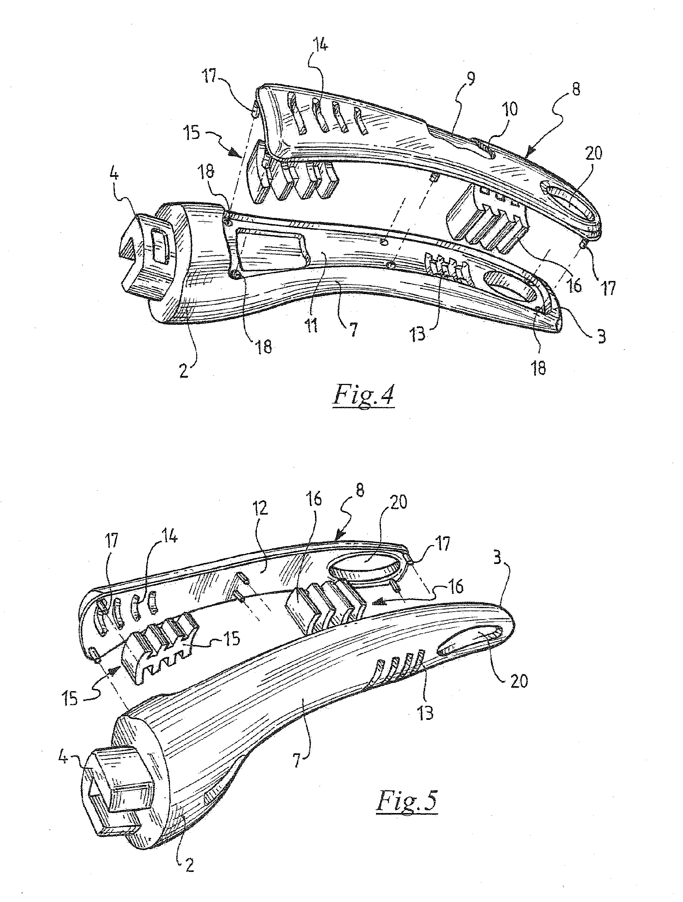

- Figure 4 shows an exploded perspective view of the parts of the handle of Figure 1, as taken from the top;
- Figure 5 shows an exploded perspective view of the parts of the handle of Figure 1, as taken from the bottom;
- Figure 6 shows the handle of the invention attached to a low saucepan;

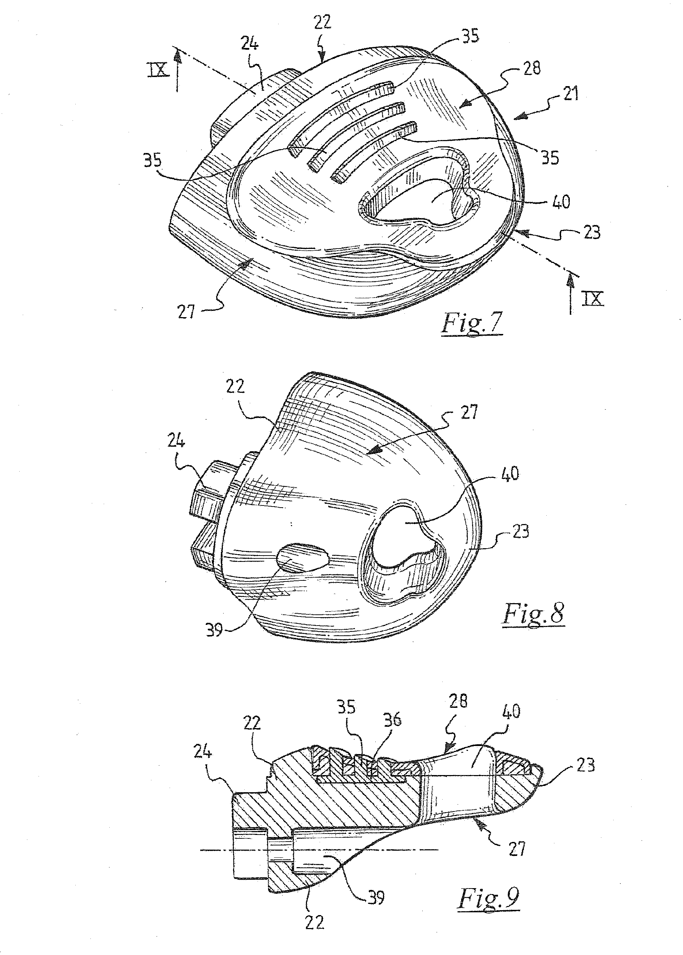

- Figure 7 shows a perspective view of the top side of a handle of the invention, in a second embodiment particularly suitable for pots or relatively high saucepans;
- Figure 8 shows a perspective view of the bottom side of the handle of Figure 7;
- Figure 9 shows a sectional view of the handle of the invention, as taken along the line IX-IX of Figure 7;
- Figure 10 shows an exploded perspective view of the parts of the handle of Figure 7, as taken from the top;
- Figure 11 shows an exploded perspective view of the parts of the handle of Figure 7, as taken from the bottom;
- Figure 12 shows a pair of handles of Figure 7 attached to a pot or a relatively high saucepan.

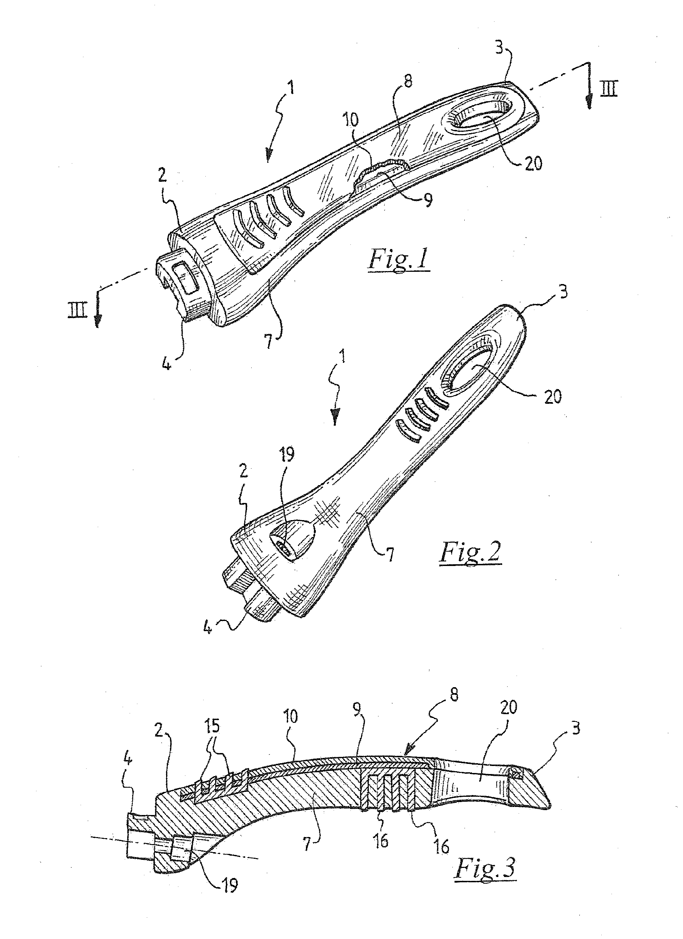

Referring to the above figures, and particularly to Figures 1, 2 and 3, in a first embodiment the handle of the invention comprises a support element, generally referenced 1, extending between a first end 2 and a second end 3.

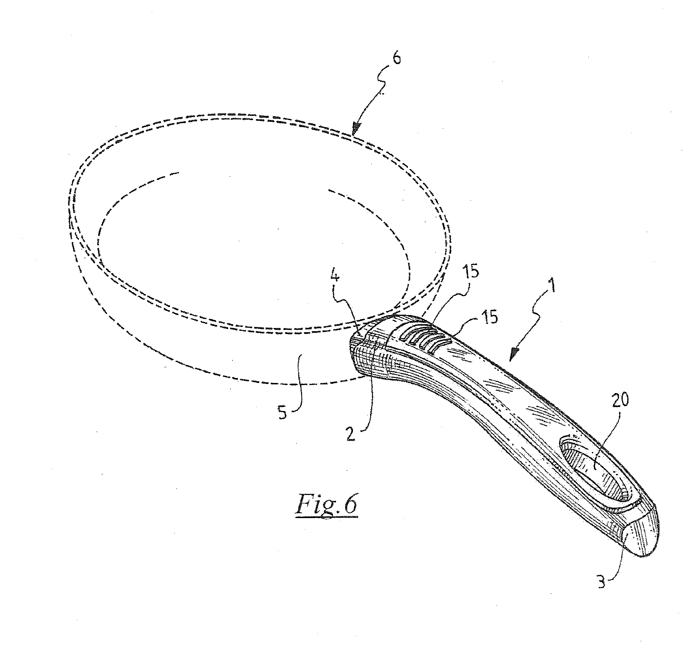

The first end 2 of said support element comprises conventional means 4 for fixation thereof to the sidewall 5 of an article of cookware 6, e.g. a low saucepan like the one outlined by broken lines in Figure 6.

The support 1 comprises a first part 7 and at least one second part, generally referenced 8.

In a preferred embodiment the latter, as shown in Figure 3, comprises a first layer 9, and a layer 10 lying thereon, which is preferably made of a transparent material, such that the nature and color of the material of the underlying layer 9 are visible.

These first part 7 and second part 8 are in overlapping relationship at their respective overlapping faces 11 and 12 and have respective housings 13 and 14 open at both faces 11 and 12. Particularly and preferably, the above mentioned housings 13 consist of a plurality of adjacent slots.

Non-slip members, referenced 15 and 16, are introduced into said housings 13 and 14 respectively and their shapes conform to the shapes of the housings 13 and 14, i.e. consist of a body with small plate elements extending therefrom and fitting into the slots that form the housings 13 and 14. The plates of the non-slip members 15 and 16 partially project out of the face opposite to the face of said part 7 or 8 with the housing 13 or 14 that overlaps the other part.

Once the parts 7 and 8 have been separately molded and have received the members 15 and 16 in their respective housings 13 and 14, they are joined together by introducing the pins 17 of the part 8 in corresponding holes 18 formed in the part 7.

These holes 18 and pins 17 form first and second press-fit means.

Such joint may be stabilized, if needed, by a conventional adhesive.

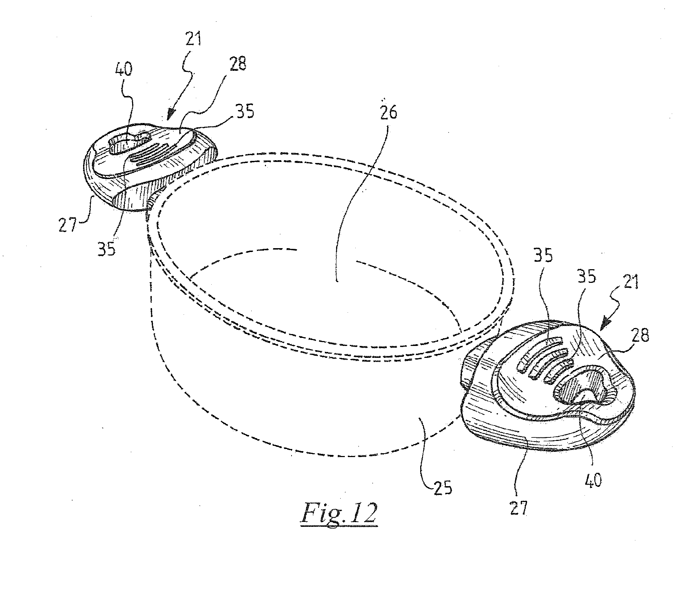

The end 2 of the part 7 also has a through hole 19 which may receive a screw, not shown, for stabilizing the connection of the handle to the wall of the saucepan 6, whereas the end 3 has a conventional aperture 20 that may be used to hang the saucepan 6 from a suspension hook. Referring to Figures from 7 to 12, in a second embodiment the handle of the invention comprises a support element, generally referenced 21, extending between a first end 22 and a second end 23. The first end 22 of said support element comprises conventional means 24 for fixation thereof to the sidewall 25 of an article of cookware 26, e.g. a relatively high saucepan like the one outlined by broken lines in Figure 12.

The support 21 comprises a first part 27 and at least one second part, generally referenced 28.

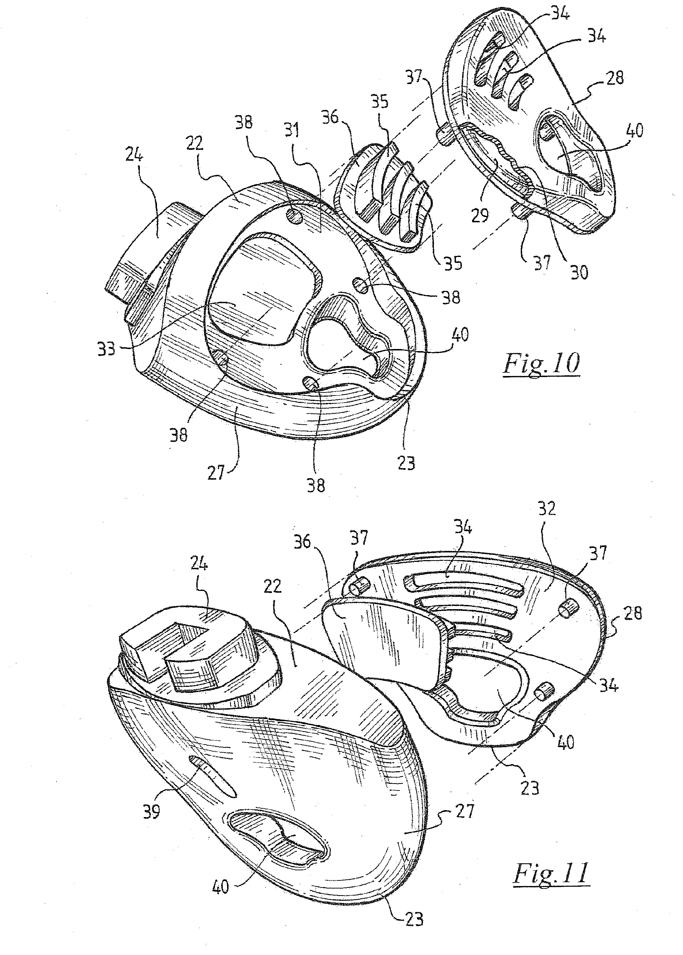

In a preferred embodiment the latter, as shown in Figure 10, comprises a first layer 29, and a layer 30 lying thereon, which is preferably made of a transparent material, such that the nature and color of the material of the underlying layer 29 are visible.

These first part 27 and second part 28 are in overlapping relationship at their respective overlapping faces 31 and 32.

The part 27 is formed with a housing 33 with a closed bottom, and the part 28 is formed with a plurality of slots 34 for receiving corresponding small plates 35 of a non-slip member 36, which is placed in the housing 33.

The plates 35 of the non-slip member 36 partially project out of the slots 34 of the part 28 that lies over the other part 27.

Once the parts 27 and 28 have been separately molded and have received the member 36 and the plates 35 in their respective housings 33 and 34, they are joined together by introducing the pins 37 of the part 28 in corresponding holes 38 formed in the part 27.

These holes 38 and pins 37 form first and second press-fit means.

Such joint may be stabilized, if needed, by a conventional adhesive.

The end 22 of the part 27 also has a through hole 39 which may receive a screw, not shown, for stabilizing the connection of the handle to the wall 25 of the saucepan 26, whereas the end 23 has a conventional aperture 40 that may be used to hang the saucepan 26 from a suspension hook. Referring to Figure 12, the saucepan 26 is shown to have two opposed handles, both formed according to the second embodiment of the invention.

The above disclosure clearly shows that the handle of the invention, in both first and second embodiments, is equipped with non-slip areas, which are formed during fabrication of the handle, with elements that can provide a variety of color combinations, allowed by the particular plastic materials that are used for molding, and can be formed in structural shapes that also improve the overall appearance of the handle.

Any sizes and materials may be used as needed, without departure from the scope of the invention, as defined of the following claims.

## Claims

1. A handle designed to be attached to the sidewall of an article of cookware and to be held in the hand of a user for acting upon said article of cookware, comprising a support element (1, 21) extending between first (2, 22) and second (3, 23) ends, the first end (2, 22) of said support element comprising means (4, 24) for attachment thereof to the sidewall (5, 25) of the article of cookware (6, 26), **characterized in that** said support element comprises a first part (7, 27) and at least one second part (8, 28), said first and said second parts being in overlapping relationship at their respective overlapping faces (11, 12, 31, 32), at least one housing (13, 14, 33, 34) formed in at least one of the parts and open at both faces of the part, a non-slip member (15, 16, 36) inserted in said housing and partially projecting out of the face opposite to the face of said part with the housing, that overlaps the other part.

2. A handle as claimed in claim 1, **characterized in that** said support element includes two non-slip members (15, 16), each received in a respective housing (13, 14) formed in the first and second overlapping parts of said support element respectively, each non-slip member partially projecting out of the face opposite to the face of the corresponding part that overlaps the other part.

3. A handle as claimed in any of claims 1 and 2, **characterized in that** said housing for the non-slip member comprises a plurality of through slots (34) formed in the part of the support element in which the housing is formed.

4. A handle as claimed in any claim from 1 to 3, **characterized in that** said housings (13, 14) for the respective non-slip members (15, 16) are formed in the first part (7) and the second part (8) of the support element respectively, proximate to the second (3) and first (2) ends thereof respectively.

5. A handle as claimed in any claim from 1 to 4, **characterized in that** said first part (7, 27) of said support element comprises said means for fixation thereof to the sidewall (5, 25) of the article of cookware.

6. A handle as claimed in any claim from 1 to 5, **characterized in that** said second part (8, 28) comprises a first layer (9, 29) facing the first part (7, 27) with a second layer (10, 30) lying over and covering it.

7. A handle as claimed in any claim from 1 to 6, **characterized in that** said first part (7, 27) of the support element comprises first press-fit means (18, 38) for fixing the second overlapping part (8, 28), and the latter comprises second press-fit means (17, 37) which are designed to cooperate with said first means.

8. A handle as claimed in claim 7, **characterized in that** said first press-fit means consist of holes and said second press-fit means consist of pins, adapted to cooperate with said holes.

9. A handle as claimed in any claim from 1 to 8, **characterized in that** said first part of the support element is formed by molding of a first plastic material, and said second part is formed by molding of a second plastic material, said plastic materials having different colors.

10. A handle as claimed in any claim from 1 to 9, **characterized in that** said second layer (10, 30) that covers the first layer (9, 29) of the second part (8, 28) of said support element is made of a transparent plastic material.

11. A handle as claimed in any claim from 1 to 10, **characterized in that** said support element comprises an aperture (20, 40) formed in the proximity of its second end.
